# EUROPEAN PATENT SPECIFICATION

(11) **EP 3 575 993 B1**
(45) Date of publication and mention of the grant of the patent: **26.01.2022**
(21) Application number: 18175372.4
(22) Date of filing: 31.05.2018
(51) Int. Cl.: G06F 21/31, H04L 29/06, H04W 12/06

(54) **METHOD AND SYSTEM FOR VALIDATING REMOTE LIVE IDENTIFICATION VIA VIDEO-RECORDING**
VERFAHREN UND SYSTEM ZUR VALIDIERUNG EINER ENTFERNTEN LIVE-IDENTIFIKATION MITTELS VIDEOAUFZEICHNUNG
PROCÉDÉ ET SYSTÈME DE VALIDATION D'IDENTIFICATION EN DIRECT À DISTANCE PAR L'INTERMÉDIAIRE D'ENREGISTREMENT VIDÉO

(43) Date of publication of application: 04.12.2019
(73) Proprietor: Nect GmbH, 20097 Hamburg (DE)
(72) Inventor: JÜRGENS, Benny Bennet, 21077 Hamburg (DE); KOHN, Fabian, 22177 Hamburg (DE)
(74) Representative: Seemann & Partner Patentanwälte mbB

(56) References cited:
- WO-A1-2015/163774
- US-A1- 2015 254 443
- US-A1- 2017 032 114

## Description

The invention concerns a method for validating remote live video-recording identification of a user, performed in a system comprising at least one server device and a recording device equipped to record a video remotely connected or connectable to the at least one server device. The invention further concerns a system for validating remote live video-recording identification of a user, the system comprising at least one server device and at least one recording device remotely connected or connectable to the at least one server device, wherein the recording device comprises a camera and a microphone and is equipped to record videos with the camera and the microphone, wherein the recording device furthermore comprises at least one of a speaker device and a vibration device.

There are many scenarios where a person needs to perform an identification, including but not limited to Know-Your-Customer (KYC) processes, where the identity of a user or customer has to be verified as part of a sign-up procedure, *e.g.,* when setting up a bank account, signing up for an insurance policy, registering for an initial coin offering (ICO) in the context of cryptocurrencies and -tokens.

One possible way of user identification is remote identification over a digital channel, such as video-ident (video identification) methods, wherein an operator identifies a client in the context of a webcam conversation. Such video-ident methods are more convenient and less time-consuming than, e.g., post-ident methods, wherein service personnel of a postal service identifies a client standing in front of them in person with the help of an identification document.

Quality problems in video-ident systems caused by human behavior and technological challenges, such as the challenges inherent in streaming live data in audio and video channels in contrast to using recorded videos, call for an improved video-ident method and system that may be processed over a digital channel, but using asynchronous and automated evaluation. Such asynchronous evaluation and the simple transfer of video recordings in a predefined, unified format, respectively, would help to overcome the technical challenges of a live broadcast, such as sufficient and stable bandwidth, as well as changes in environmental variables.

In order to provide for such asynchronous evaluation by an evaluation unit, which may be at a remote location, it must be ensured that it is possible to check that the recording is without falsification or tampering and has not been used before. It is no longer possible to check whether the person to be identified acts lively by reacting individually and spontaneously, since the recording is not a live transmission. Furthermore, it has to be ensured that the person in the video stream is a live person and not a photograph of a person.

Like with all security systems, it is expedient to improve the system and method by incorporating multiple factors. Preferably, the method should include factors that can be added without actions by a user, so that the user may concentrate on the user-based security factors. The user should not be burdened with too many tasks, so that a machine factor or background factor is beneficial. Such machine factor may also be expedient, if a user is not capable of delivering the first factor, for example, due to bodily disabilities, or because the security level of one factor is sufficient and the user should be burdened as little as possible.

Such machine factors or background factors may be thought of in terms of watermarking, for example, by using audible or inaudible sounds, which may be added to the audio track of a video recording either digitally or by playing the sounds during the recording, such as described in US 2017/0220786 A1.

US 2015/0254443 A1 discloses a method for biometric authentication of a user by a challenge/response procedure with a mobile station including authenticating the enrolled user before performing a transaction. A communication channel is set up between the mobile station and an authentication server and a challenge from the authentication server is forwarded to the mobile station. A response sequence expressed by the user is recorded simultaneously with ambient signals or a response of the ambience. The recorded response sequence and the recorded ambient signals are forwarded to the authentication server and evaluated based on related biometric data retrieved from the database. It is verified whether the user corresponds to the enrolled user. The ambient signals and identifying signal changes within the ambient signals are evaluated, and it is determined whether the identified signal changes represent a logical sequence of events in the user's vicinity.

In WO 2015/163774 A1, an audio-based system is disclosed that includes a processor including watermark logic to output a first watermark to an output device that outputs a first watermark signal, based on the first watermark, to an acoustic transmission medium. The processor also includes a recording logic to capture, at a first time period, an authentication submission comprising the first watermark signal convolved, via the acoustic transmission medium, with a first passphrase signal.

It is an object of the present invention to provide a method and a system for validating remote live video-recording identification of a user with enhanced security of validation.

This object is achieved by a method for validating remote live video-recording identification of a user, wherein in a system comprising at least one recording device equipped to record a video, the following steps are carried out in succession:
a) the recording device records two or more watermarked identification video capturing biometric features of the user and a personal identification document of the user including at least one user-related liveness check, wherein the two or more identification videos are watermarked, wherein during the recording of the identification videos, the recording device generates physical watermarking signals according to a unique or quasi-unique watermarking specification, wherein the physical watermarking signals enter the audio track and/or the video track by means of physical oscillations generated by a speaker device of the recording device and/or a vibration device of the recording device and recorded by a microphone, a camera and/or an accelerometer of the recording device, wherein at least two separate identification videos are recorded with at least one biometric identification video capturing the biometric features of the user and at least one separate document identification video capturing the personal identification document of the user, wherein the at least two separate identification videos are watermarked using different unique or quasi-unique watermarking specifications,
b) the recorded watermarked identification videos are analysed by an analysing unit of the recording device or a server device during the recording of the watermarked identification videos or after finishing the recording of the watermarked identification videos, and
c) the analysing unit analyses the watermarked identification videos for identification information of the user and for the presence of watermarking signals according to the unique or quasi-unique watermarking specifications,
wherein the biometric identification video and the document identification video are compared with each other with respect to a similarity of recording parameters and/or environments.

The present invention rests on the basic idea that regardless of the use case, identification can be performed using an automated or semi-automated process, in which the person to be identified is required to submit some form of video recording of an identification document and biometric data of the user him- or herself using a recording device such as a smartphone to a server device.

A watermarking concept is combined with a user-related liveness check to validate the real-time and/or liveness of the recording of the video. In doing so, various features are combined or convoluted with the recorded video over which the user has no direct control, such as randomly or deterministically chosen sound frequencies superimposed during the recording (by means of playing and recording them on the recording device), random vibration signals induced on the recording device, detected by means of a microphone, an accelerometer or even visual fluctuations in the recorded video.

In the context of the present application, a unique watermarking specification is a watermarking specification that is unique to a single instance of use, whereas a quasi-unique watermarking specification may be chosen or generated from a limited set of watermarking specifications, the set being large enough to make an accidental repetition of the same watermark specification unlikely. Depending on the intended use or frequency of use, the set may contain dozens, hundreds, thousands or more of such predetermined specifications.

These unique or quasi-unique watermark specifications are usually generated or selected by the server device and validated, preferably by the same entity, on the recorded watermarked video data to ensure that the recorded information was not tampered with in any way and that the recording was performed at the time of identification, *i.e.,* no pre-recorded material was used.

The combination of user-related liveness checks and physical watermarking of the identification video(s) renders the identification highly tamperproof and hence reliable.

In embodiments of the method, the system furthermore comprises a server device, to which the recording device is connected or connectable, wherein the user initialises an identification request on the recording device, the recording device requests a unique watermarking specification from a server device, and the server device selects or generates a unique or quasi-unique watermarking specification and provides the unique or quasi-unique watermarking specification to the recording device.

In one embodiment, the server device is physically distinct from the recording device, and the server device and remote device are connected or connectable remotely. In an alternative embodiment, the server device may be co-located on the recording device. This may be the case, if the recording device is, e.g., a smartphone with all the necessary components, wherein the recording device and the server device run as separate applications on the same device.

In embodiments, the recording device may be, by way of nonlimiting example, a smartphone, a tablet device or a laptop computer with a camera and a playback device and a recording device, or a dedicated video capture device. The recording device is configured by means of a software, in particular an executable program or app running on the recording device, to perform the process steps assigned to the recording device. Likewise, the server device is configured by means of a software running on the server device to perform the process steps assigned to the server device.

According to the present invention, at least two separate identification videos are recorded with at least one biometric identification video capturing the biometric features of the user and at least one separate document identification video capturing the personal identification document of the user, wherein the at least two separate identification videos are watermarked using different unique or quasi-unique watermarking specification. This separation of the recording will simplify the analysis of the videos to perform the identification of biometric data in one video and features of the identification document in the other video.

In embodiments, the unique or quasi-unique watermarking specification is a watermark sound file to be played at least once by the recording device at the beginning of the recording and/or one or more specified times after the beginning of the recording, or the unique or quasi-unique watermarking specification is a watermarking data file containing the specification of a non-random or random series of one or more sound frequencies and/or vibration signals, in particular including timing information, the timing information in particular counting from the time of the start of the recording of the identification video, or absolute time stamps. In some of these embodiments, the recording device is configured to interpret the unique or quasi-unique watermark specification and generate a unique or quasi-unique watermark signal according to the unique or quasi-unique watermark specification. In cases in which different vibration frequencies are supported by a vibration device, with frequencies changing stepwise and/or continuously, the watermarking specification may include vibration frequency information.

The sound file or the watermarking data file may contain a set of *n_{freq}* random frequencies with *n_{freq}* ≥ 1 and a timestamp *t_{play}*, wherein the frequencies are within, above and/or below the audible range, randomly or deterministically change over time or are constant, and/or have different duration features, the duration features including pulsed, limited constant or unlimited length. The terms "limited constant length" and "unlimited length" are to be construed in the context of the present invention to mean that in the case of an unlimited length, the frequency will be present until the end of the video recording, whereas a limited length signal will end before the video recording concludes.

In cases in which the watermark specifications or their parameters are chosen deterministically, the deterministic choice may be synchronised over time or count of requests.

The watermark signal may be a vibration signal generated by a vibration device of the recording device. The vibration may randomly or determinalistically change over time or be constant and/or have different duration features, e.g., be pulsed, constant or present for the whole time of the recording. It has been found that vibrations of the vibration device are detectable in the video recording in the sound track or as a visual distortion in the video track. In addition or alternatively, an accelerometer may detect such vibrations. Therefore, in an embodiment, fluctuations detected by an accelerometer of the recording device are transmitted to the server device in connection with the two or more identification videos and analysed by the server device with respect to its accordance with the unique or quasi-unique watermarking specification.

Recording devices with built-in vibration devices may be, e.g., smartphones, tablet computers or laptops with built-in vibration motors and/or linear drives, such as taptic engines^{®}. The purpose of taptic engines is to provide tactile and/or haptic feedback and cause vibration of the device or parts of it. Usually, vibration devices are shut down during recordings so as not to interrupt and degrade the recording, be it an audio recording or video recording. However, it has been found that vibration pulses are clearly detectable in audio recordings as well as in video recordings as recognisable background noise or as recognisable distortions or blurring in the video track. Vibrations, which usually are a nuisance in the context of recordings, can therefore serve to provide clearly recognisable watermarks in the recording. A further benefit is that a user will be aware that a proper watermarking has been applied to the recording while it is being made.

It is almost impossible for a potential attacker to manipulate a recording in its audio track or in its video track or associated accelerometer data with respect to the specific watermarking signals or sequences caused by the activation of the vibration device of the recording device, as well as predicting the exact unique or quasi-unique watermarking sequence, which may have a large number of parameters that may be altered in order to make the watermarking sequence unique. Therefore, a very robust real-time proof is achieved.

Such a vibration watermarking according to the present invention may be combined with more classical watermarking through insertion of audible or non-audible sounds (non-noise), which may carry additional information coded into the frequency and pulse structure of the sound watermarks.

The recording of the unique or quasi-unique vibration watermarking sequence or sequences may be either only as audible, visible or acceleration watermarking, or as combination of audible and visible watermarking, as combination of audible and acceleration watermarking or as combination of visible and acceleration watermarking, or as combination of audible, visible and acceleration watermarking, meaning the effects of the activation of the vibration device measurable in one, two or all three channels, namely audio track, video track and accelerometer data.

With this, the watermarks may not only be of audible or visible nature, but also of vibrational nature suited for detection by an accelerometer. Audible and visible watermarks are to be understood in this context as the audible and, respectively, visible effects of the activation of the vibration device on the audio track and the video track of the recording, respectively. An acceleration watermarking thereby is to be understood as a vibrational watermarking as sensed by an accelerometer or acceleration sensor present in many modern recording devices.

Such accelerometers usually record and log acceleration in 3-tuples, namely with respect to x-, y- and z-axes relative to an arbitrary reference frame of the recording device, of floating point values representing the acceleration along the respective axis, typically in the unit of meters per square second or g (9,81 m/s²). Raw acceleration data may then be extracted from the accelerometer at a specified sample rate, e.g., 100 Hz, which is preferably equal or higher than a video frame rate and/or a vibration frequency used by the vibration device. The data may be provided as a vector *[t, aₓ, a_{y}, a_{z}]* of timestamps *t* and accelerations *aₓ, a_{y}, a_{z}* in *x*-, *y*- and *z-*directions at the respective times.

The logged acceleration data may be transmitted as a separate data stream, e.g. a text file or a string, which may or may not be encrypted and/or cryptographically signed. The data may alternatively be embedded as global metadata in the recording. Most video container formats support addition of arbitrary metadata. It may also be embedded as metadata on a frame-to-frame basis, since some video container formats support such metadata on frame level. The acceleration data may furthermore be embedded as visible or audible data in the audio or video stream itself, if present, or be hidden (e.g. steganographically) in the video or audio stream itself, if present, without the knowledge of a possible attacker intercepting the message.

Embodiments of the method entail that the analysis of the watermarking signals in step c) of the identification videos performed by the server device includes one or more of:
- background noise suppression in the audio track of the watermarked identification videos,
- acoustic noise and/or sound level detection in the audio track of the watermarked identification videos with respect to vibration signals due to the activation of a vibration device of the recording device,
- optical distortion detection in the video track of the watermarked identification videos due to the activation of a vibration device of the recording device,
- a Fourier analysis including peak detection in the Fourier spectrum of the audio track of the watermarked identification videos, or similar principal component or wavelet analyses,
- comparison of a set of detected frequencies with a set of generated frequencies according to the unique or quasi-unique watermarking specification,
- a timestamp verification of detected signals, and
- a pattern verification with respect to changes in the detected and generated frequencies.

The mathematical concepts such as Fourier analyses and technical signal analysis measures required to perform such analyses are listed above by way of example and are well-known to the skilled person.

Processing methods for accelerometer data are similar to the processing of audio data, since they are similar by nature, and may include all of the analytical tools listed hereabove with respect to the analysis of the audio track in step c) of the inventive method, albeit adapted for the structure and content of the accelerometer data. These methods include, e.g., but are not limited to extraction or cropping of relevant sections of the recorded data; noise suppression in the accelerometer data, e.g., from constant vibrations present in a vehicle or unintentional movements by the end user, in one or multiple axes; normalization of the accelerometer data in one or multiple axes; template and/or pattern matching of the vibration sequence(s) with a reference; Fourier analysis, principal component analysis or wavelet analysis and similar methods to extract or validate the vibration frequencies. The signals may be isolated from other components of the data stream, e.g., by filtering, such as filtering on low frequency noise up to 50 Hz or 100 Hz representative of vibration signals, which may also be accounted for by choosing an appropriate sampling frequency.

Analysis of accelerometer measurements may include, among others, consistency assessment of video and/or audio data and accelerometer sensor data through, e.g., template analysis; (cross-)correlation analysis of "background" magnitudes and patterns, e.g., between visible movements in the video caused by the end user and measured accelerations; temporal association of vibration magnitude or patterns observed in video, audio and/or accelerometer data during watermarking; assessment of environment and cross-check with previous cases and/or stored data.

Analysis of the video data for vibrational effects may include an analysis of picture sharpness, since the vibration will produce a certain amount of blurring. The sharpness analysis may be done via averaging of contrast steepness (pixel-to-pixel variation of brightness) with respect to brightness (greyscale) and/or colour values, and/or edge sharpness detection.

Analysis of audio data for vibrational effects may include many of the aforementioned analysis methods in connection with the analysis of accelerometer data, and may include one or more of, among others, normalization of the amplitude of the audio track or audio recording, cropping to the parts of the recording containing the watermarking signals and filtering using high pass, low pass or band pass filters.

Further details about vibrational watermarking are disclosed in the parallel European Patent Application by the present Applicant entitled *"Method and System for Real-Time Proofing of a Recording",* filed on the same date as the present application.

Further uses of accelerometer data may include checking movements of the user during the recording, such as detecting manual input actions, such as hitting a physical button or a virtual button displayed on the display of the recording device. The movement data from the accelerometer can also be analysed for consistency with visual movements from the video track of the recording. This analysis, or the analysis of accelerometer data in general, may also be extended over a sequence of user prompts and/or recordings, the sequence including user identification and/or document based identification, including one or more video sequences/or and recordings, thus proving their unity as a single instance of video-identification.

In a further embodiment, accelerometer data may be accompanied by location data, such as from GPS sensors and WiFi sensors with respect to SSID and location of the IP address of the WiFi node.

A so-called liveness check can be performed by prompting the person to perform a predetermined action before starting the recording or during the recording, which can be checked during the evaluation, such as speaking words or phrases, moving the eyes, moving the head, answering questions etc. The evaluating unit can check, for example, whether lip movements coincide with the words to be uttered, and whether the words are audible in the audio track of the recording. This can be used as machine evaluated proof of the liveness of the user in front of the camera, since facial features on a photo would not move. A method specifying different ways to perform such a liveness check is described in EP 1 147 494 B1, for example.

In an embodiment, a user-related liveness check is performed wherein the user proves his or her presence at the time of execution of the identification process. This can be achieved by requiring the customer to provide a video of themselves, e.g., by means of a selfie-video, during which they are required to prove their presence by some means of challenge-response mechanism, e.g., having to read back some randomly or pseudo-randomly generated words or performing a certain randomly induced action. If the liveness check action is different in each case, the liveness check can be used as a further real-time proof. In this way, the repeated playing of a recording which includes an actual liveness check could be identified.

Like many security features, liveness checks can be attacked, in part trivially, even if the liveness check serves as additional real-time proof. This can be improved, by making the prompts to the user random and, simultaneously, hard to grasp for machines. Such prompts may be the solving of a question or riddle, which is easy for humans, but hard for machines, such as providing sequences of letters and numbers in alternating font types on the display or other so-called "captcha" tasks. In this way, the liveness check cannot only be used with respect to liveness, but also for securing the specific time of the recording. Like all security systems, the present security system can be improved by making it incorporate multiple security factors.

In order to implement a user-related liveness check, in an embodiment, a challenge-response mechanism is performed when capturing biometric features of the user, wherein in particular the recording device requests a unique authentication passphrase from the server device, the server device selects or generates a unique authentication passphrase with *n_{words}* ≥ 1 randomly selected words, and provides the unique authentication passphrase to the recording device, wherein the recording device displays the unique authentication passphrase to the user and prompts the user to speak the unique authentication during the recording of the watermarked identification videos, wherein the server device furthermore analyses the watermarked identification videos with respect to the presence of audio data and/or video data identifiable as the user speaking the unique authentication passphrase. Alternative means of a challenge-response mechanism are, e.g., posing a randomly selected question and having the user answer that question verbally. The question may comprise, a.o., simple mathematical calculations. Such challenges may be displayed as pictures, making it more difficult in the process for machines to interpret.

In a further embodiment, a user-related liveness check is performed when capturing a personal identification document of the user, in particular the recording device displaying to the user information prompting the user to move, tilt and/or rotate the personal identification document, in particular such that security features of the personal identification, in particular holograms or optical variable ink (OVI), are captured which change visibility depending on the specific angles of lighting and viewing. Such visible changes of features of the personal identification document are observed in the subsequent analysis of the watermarked identification video and taken as proof of the liveness of the video recording of the document and of the validity of the document itself.

The biometric identification video and the document identification video may be compared with each other with respect to a similarity of recording parameters and/or environments, in particular comparing dynamic ranges, background noise levels and/or relative signal strengths of the extracted frequencies. A similarity in the recording parameters and/or environment is indicative of the videos having been taken at the same location and in temporal succession, thus enhancing the probability that they belong to the same single act of user identification. The dynamic range of the audio track may be determined by the minimum and maximum amplitudes and/or frequencies observed in the sound spectrum throughout the full recorded video, thereby fingerprinting the recording device of the recording device.

In an embodiment, in case at least one prior watermarked identification video recording and/or biometrical features extracted from prior watermarked identification videos is or are stored in or accessible to the server device, the recorded watermarked identification video is compared with the at least one or multiple prior watermarked video(s) with respect to visible and/or voice-related biometrical features of the user, in particular voice pattern matching, and/or with respect to a similarity of recording parameters and/or environments, in particular comparing dynamic range, background noise levels and/or relative signal strengths of the extracted frequencies. According to an embodiment, the comparison of the watermarked identification videos is analysed with respect to a likelihood that the various watermarked identification videos are recorded at the same place and/or subsequently at the same time. If some of these factors match previous recordings, it is indicative of a low likelihood of tampering having taken place. For example, a matching dynamic range may indicate a strong likelihood that the same recording device has been used in multiple cases.

It shall be noted that the aforementioned process can be applied to any video to validate its authenticity and liveness, not only to the described example(s). Further use cases are discussed below. Without limiting the scope of usability, the described methods can in full or in parts be applied to a multitude of scenarios and use cases, for example, but not limited to
- the validation of two or more videos recorded by an app on any capable recording device, such as a smartphone, laptop or similar, which are uploaded to and processed on a server as means of real-time validation and protection against manipulations, such as
   ∘ playback of a potentially manipulated pre-recorded video on a screen which is recorded and submitted ("analogue / physical fraud attempt"),
   ∘ insertion of a potentially manipulated pre-recorded video on the device in question by means of reverse engineering of the app ("digital fraud attempt"),
   ∘ real-time manipulation of the audio and/or video component of the video recording to alter the content of the voice data or audio data or facial images submitted to the server (e.g., changing the information conveyed by the client),
- the real-time validation (or liveness check) and/or authentication challenge of video calls, such as support video calls, banking video calls or medical video calls,
- the real-time validation (or liveness check) and/or authentication challenge of voice calls, such as tele support, telebanking or telemedicine situations, identification and/or authentication challenge of a person in the context of a personal encounter, *e.g.,*
   ∘ a payment process using a selfie-video of a person, or
   ∘ a counter check-in at a doctor's office or a car-sharing desk.

The object of the present invention is also achieved with a system for validating remote live video-recording identification of a user, the system comprising at least one server device and at least one recording device remotely connected or connectable to the at least one server device, wherein the client device comprises a camera and a microphone and is equipped to record videos with the camera and the microphone, wherein the recording device furthermore comprises at least one of a speaker device and a vibration device and is equipped to record videos with the camera and the microphone, wherein the server device comprises a first unit configured to select or generate unique watermarking specifications on request by the client device and a second unit configured to analyse watermarked identification videos transmitted by the client device according to a previously presented method according to the invention. The system thereby embodies the same features, advantages and properties as the method according to the invention.

In embodiments, the recording device further comprises a display configured to display commands to be followed by a user and/or an accelerometer.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a schematic depiction of a system carrying out a method according to one embodiment of the invention and
- Fig. 2: a schematic depiction of a system carrying out a method according to a second embodiment of the invention.

In the drawings, the same or similar types of elements or respectively corresponding parts are provided with the same reference numbers in order to prevent the item from needing to be reintroduced.

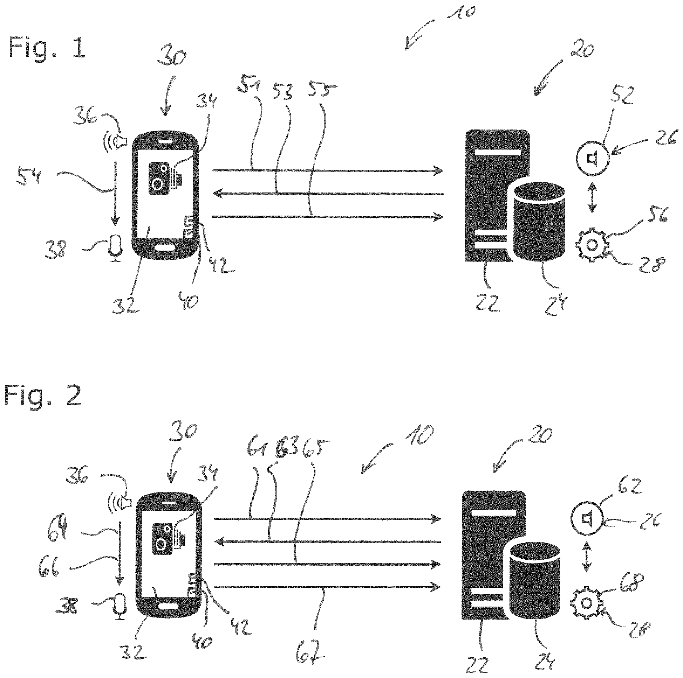

In Figs. 1 and 2, a system 10 comprising a server device 20 and a recording device 30 is shown, wherein the recording device 30 is remotely connected to the server device 20. The server device 20 is represented as a standard server comprising a computing device 22, such as, for example, a computer, and a storage device 24. The computing device 22 may have implemented a first unit 26 for generating or selecting unique or quasi-unique watermark signatures and a second unit 28 for analysis of identification videos. The recording device 30 is represented as a smartphone, wherein several features have been depicted in addition, on top of display 32, namely a camera 34, a vibration device 40 and an accelerometer 42. In addition, the speaker device 36 and microphone 38 are shown.

The server device 20 may be located anywhere, such as a central location for a multitude of applications or uses. In this case, an identification and authentication provider may be contracted by specific service providers to provide identification and authentication of users for their services. Alternatively, the server device 20 may be located locally with a service provider and dedicated to one service only.

The system is not limited to the server device 20 as depicted in Fig. 1 and Fig. 2 or the smart phone as recording device 30 as depicted in Fig. 1 or Fig. 2. The recording device 30 may also be a laptop, a tablet device or some other dedicated device capable and configured to carry out the parts of the process assigned to the recording device 30.

In the following, several processes will be described with respect to the system shown in Fig. 1 and Fig. 2.

In a first embodiment, the recording device 30 initialises a process case with the server device 20. As part of the initialization, the recording device 30 requests in step 51 a unique or quasi-unique watermark specification, for example, a unique or quasi-unique watermark sound file, from the server device 20. Alternatively, the unique or quasi-unique watermark specification may contain specific instructions for generating a unique or quasi-unique watermark signal.

In the case of a sound file, the server device 20 then generates in step 52 a sound file containing a set of *n_{freq}* random frequencies (*n_{freq}* > 1) *F_{gen}* and a timestamp *t_{play}.* The frequencies can randomly or deterministically be within the audible range, below and/or above said range, change over time or be constant, and have different duration features, e.g., pulsed, constant, and can also be present for the whole time of the recording. These information may also be present embedded in a unique or quasi-unique watermark specification provided by the server device 20 to the recording device 30. Instead of generating the unique or quasi-unique watermark specification, the unique or quasi-unique watermark specification may also be randomly chosen from a multitude of pre-generated and stored unique or quasi-unique watermark specifications.

The unique or quasi-unique watermark specification is then provided to the recording device 30 in step 53. In step 54, the recording device 30 records a video and plays back the sound file or generates a unique or quasi-unique watermark signal according to the unique or quasi-unique watermark specification while recording the video at the provided time index *t_{play}* relative to the start of the recording on the recording device 30, watermarking the recording in the process. Examples for video recordings are a simple selfie-video of a user, a selfie-video of a user, during which the user is presented with *n_{word}* random words generated or selected by the server device 20 which he or she is prompted to pronounce verbally at the time of recording, thereby providing a liveness check and verification, a video of a personal identification document, e.g., an ID card, a passport, a driver's license or a health insurance ID card, during which the user is requested to move the document in question in a way that certain security features, e.g., holograms, are visible and/or change over time, or generally any kind of video recording, not limited to the above examples.

In step 55, the recording device 30 sends the watermarked identification video back to the server device 20 for analysis. In step 56, the server device 20 performs an analysis of the watermarked identification video recording with respect to identifying the user and validating the video recording by means of the unique or quasi-unique watermark signature and any further validation and liveness check information embedded therein. In particular, the server device 20 may perform one, multiple or all of the following steps:
- Noise suppression to reduce constant background noise,
- Fourier, wavelet or principal component analysis to extract the main frequencies contained in the sound layer of the video file,
- peak detection in the Fourier spectrum to extract the recorded frequencies *F_{rec},* or equivalent extraction of recorded frequencies from the wavelet or principal component analysis,
- comparison of the set of generated frequencies *F_{gen}* and the set of extracted frequencies *F_{rec}*, wherein the watermark and hence the video is considered to be valid if certain conditions are fulfilled, ideally, if *F_{gen}* = *F_{rec}*,
- timestamp verification to validate that the frequencies have been played back or generated started at the requested time *tplay,*
- pattern verification to validate that changes in generated frequencies *F_{gen}*, *e.g.,* pulsing, are present in the recorded frequencies *F_{rec}* as well,
- voice matching of spoken words in selfie-video with archived voice data, if present.

The analysis may also include identification of lip movements and correlation of the lip movements of the user with a unique pass phrase presented to the user, or a full voice recognition for identification of the utterance of the unique pass phrase by the user.

The identification video may comprise both video footage of the face and sound of the voice of the user and of the personal identification document to be presented upon prompting by the recording device 30. Any commands to the user, for example, for showing the personal identification document, for specific movements of the personal identification document, for pronouncing a unique pass phrase, may be accompanied by inaudible acoustic watermarks specific to the respective command so that the analysis of the video file with respect to the personal identification document and the speaking of the unique pass phrase may be helped by restricting the respective analysis to those parts of the video that are watermarked with respect to the commands given to the user. These command related watermarks are not to be confused with the unique or quasi-unique watermark signatures.

Identification of the unique or quasi-unique watermark signature inside the identification video may also be achieved by analyzing the audio track and/or the video track for signals indicative of the activation of the vibration device 40 of the recording device 30. Such a signal will present itself in the video signal as the blurring or distortion present during the time of the activation of the vibration device 40. Depending on the interference between the frequency of the vibration device and the frequency of image capture in the video sequence, the vibration may lead to a periodic wobbling of the captured image. The vibration may also be picked up by an accelerometer 42, which information may be also be time indexed and transmitted to the server device 20 for analysis.

The method depicted in Fig. 2 is in many ways similar to the one depicted in Fig. 1. Again, when the user initialises the process case with the server, as part of this initialization, the recording device 30 requests in step 61 a unique or quasi-unique watermark specification such as a unique or quasi-unique watermark sound file from the server device 20. In step 62, the server device 20 generates in a first unit 26 thereof a unique or quasi-unique watermark specification containing in one alternative a set of random frequencies or vibration instructions and timestamps therefore, in one alternative integrated into a unique or quasi-unique watermark sound file, and sends the requested unique or quasi-unique watermark specification in step 63 back to the recording device 30.

In addition to the unique or quasi-unique watermark specification, the data package transmitted back to the recording device 30 may also contain a pass phrase of one or more words randomly selected by the server device 20. In step 64, the recording device 30 records a selfie-video as biometric identification video of the user, during which the user is presented with the words of the pass phrase which he or she is required to pronounce verbally at the time of recording. In this way, a liveness check and verification is achieved. During the recording, a unique or quasi-unique watermark signal according to the unique or quasi-unique watermark signature is played back or generated at the provided time indices, thereby watermarking the recording in the process. The recording device 30 in step 65 then sends the watermarked selfie-video back to the server device 20 for analysis.

In step 66, the recording device 30 records a document identification video, recording a video of a personal identification document, during which the user is prompted to move the document in question in a way that certain security features, for example holograms, are visible and/or change over time. During the recording, the same or a different unique or quasi-unique watermark signal is generated or played back at a provided time index relative to the start of the recording on the recording device 30, watermarking the recording in the process. Using the same unique or quasi-unique watermark signal and unique or quasi-unique watermark signature as in the biometric identification video will link the two identification videos to each other. However, using unique or quasi-unique watermark signatures unique to each of the two identification videos will further diminish the danger of tampering and theft of identity, since it would be impossible to extract the unique or quasi-unique watermark signature of the first recording and insert it in the second recording.

The order of the recording of the biometric identification video and the document identification video may be reversed to the order displayed in Fig. 2.

The recording device 30 will then send back the watermarked document identification video to the server device 20 for analysis in step 67, which is then performed in step 68 in a second unit 28 of the server device 20 according to the description given with respect to the method depicted in Fig. 1. If a pass phrase is to be pronounced by the user, the server device 20 may additionally perform speech recognition in order to extract the unique pass phrase from the audio track of the identification video. This may be performed irrespective of whether only one identification video or two separate identification videos are recorded.

In case that two separate identification videos are captured, the server device 20 may perform one, multiple or all of the following additional steps:
- comparison of the background noise in both videos to validate that both videos were captured in the same environment,
- comparison of the relative signal strength of the extracted frequencies to validate that both videos were captured in the same environment,
- comparison of the background noise with archived data, e.g., from previous process cases, to validate that the videos were captured in the same environment,
- comparison of the relative signal strength of the extracted frequencies with archived data, e.g., from previous process cases, to validate that both videos were captured in the same environment.

It shall be noted that the aforementioned process can be generalised to N (N > 2) videos to be validated and/or combined. Several of the aforementioned validation methods and/or processes are not necessarily "hard" criteria to reject and/or accept a video, but may be combined into a validity score or probability which eventually is used to characterise the video. For example, a mismatch in the comparison of background noise levels between two or more videos does not necessarily signify a validation failure, as both videos could simply be taken in different rooms, however a match increases the likelihood of both videos being recorded at the same time and/or place, a mismatch of current data with archived data regardless of the metric in question does not necessarily signify a validation failure, as the conditions could be different at a different time, however a match increases the likelihood of both videos being recorded at the same time and/or place.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 10: system
- 20: server device
- 22: computing device
- 24: storage device
- 26: first unit
- 28: second unit
- 30: recording device
- 32: display
- 34: camera
- 36: speaker device
- 38: microphone
- 40: vibration device
- 42: accelerometer
- 51: request unique or quasi-unique watermark specification, passphrase
- 52: generate/select unique or quasi-unique watermark specification, passphrase
- 53: provide unique or quasi-unique watermark specification, passphrase
- 54: record video, generate unique or quasi-unique watermark signal, prompt passphrase
- 55: send watermarked video file to server device
- 56: analyse watermarked video file
- 61: request unique or quasi-unique watermark specification, passphrase
- 62: generate/select unique or quasi-unique watermark specification, passphrase
- 63: provide unique or quasi-unique watermark specification, passphrase
- 64: record video, generate unique or quasi-unique watermark signal, prompt passphrase
- 65: send watermarked video file to server device
- 66: record second video and generate unique or quasi-unique watermark signal
- 67: send second watermarked video file to server device
- 68: analyse watermarked video files

## Claims

1. Method for validating remote live video-recording identification of a user, wherein in a system (10) comprising at least one recording device (30) equipped to record a video, the following steps are carried out in succession:
a) the recording device (30) records (54, 64, 66) two or more watermarked identification videos capturing biometric features of the user and a personal identification document of the user including at least one user-related liveness check, wherein the two or more identification videos are watermarked, wherein during the recording of the identification videos, the recording device (30) generates physical watermarking signals according to a unique or quasi-unique watermarking specification, wherein the physical watermarking signals enter the audio track and/or the video track by means of physical oscillations generated by a speaker device (36) of the recording device (30) and/or a vibration device (40) of the recording device (30) and recorded by a microphone (38), a camera (34) and/or an accelerometer (42) of the recording device (30), wherein at least two separate identification videos are recorded (64, 66) with at least one biometric identification video capturing the biometric features of the user and at least one separate document identification video capturing the personal identification document of the user, wherein the at least two separate identification videos are watermarked using different unique or quasi-unique watermarking specifications,
b) the recorded watermarked identification videos are analysed by an analysing unit of the recording device (30) or a server device (20) during the recording of the watermarked identification videos or after finishing the recording of the watermarked identification videos, and
c) the analysing unit analyses (56, 68) the watermarked identification videos for identification information of the user and for the presence of watermarking signals according to the unique or quasi-unique watermarking specifications,
wherein the biometric identification video and the document identification video are compared with each other with respect to a similarity of recording parameters and/or environments.

2. Method according to claim 1, wherein the system furthermore comprises a server device (20), to which the recording device (30) is connected or connectable, wherein prior to recording the recording, the user initialises an identification request on the recording device (30), the recording device (30) requests (51, 61) a unique watermarking specification from a server device (20), and the server device (20) selects or generates (52, 62) a unique or quasi-unique watermarking specification and provides (53, 63) the unique or quasi-unique watermarking specification to the recording device (30).

3. Method according to claim 1 or 2, **characterised in that** the unique or quasi-unique watermarking specification is a watermark sound file to be played at least once by the recording device (30) at the beginning of the recording and/or one or more specified times after the beginning of the recording, or the unique or quasi-unique watermarking specification is a watermarking data file containing the specification of a non-random or random series of one or more sound frequencies and/or vibration signals, in particular including timing information, the timing information in particular counting from the time of the start of the recording of the identification video, or absolute time stamps.

4. Method according to claim 3, **characterised in that** the sound file or the watermarking data file contains a set of *n_{freq}* random frequencies with *n_{freq}* ≥ 1 and a timestamp *t_{play}*, wherein the frequencies are within, above and/or below the audible range, randomly or deterministically change over time or are constant, and/or have different duration features, the duration features including pulsed, limited constant or unlimited length.

5. Method according to one of claims 1 to 4, **characterised in that** fluctuations detected by an accelerometer (42) of the recording device (30) are transmitted to the server device (20) in connection with the two or more identification videos and analysed by the server device (20) with respect to its accordance with the unique or quasi-unique watermarking specification.

6. Method according to one of claims 1 to 5, **characterised in that** the analysis of the watermarking signals in step c) of the identification videos performed by the server device (20) includes one or more of:
- background noise suppression in the audio track of the watermarked identification videos,
- acoustic noise level detection in the audio track of the watermarked identification videos with respect to vibration signals due to the activation of a vibration device of the recording device,
- optical distortion detection in the video tracks of the watermarked identification videos due to the activation of a vibration device of the recording device,
- a Fourier analysis including peak detection in the Fourier spectrum of the audio tracks of the watermarked identification videos, or principal component or wavelet analyses,
- comparison of a set of detected frequencies with a set of generated frequencies according to the unique or quasi-unique watermarking specification,
- a timestamp verification of detected signals, and
- a pattern verification with respect to changes in the detected and generated frequencies.

7. Method according to one of claims 1 to 6, **characterised in that** accelerometer data are analysed over a sequence of user prompts and/or recordings, the sequence including user identification and/or document based identification, including one or more video sequences/or and recordings.

8. Method according to one of claims 1 to 7, **characterised in that**, when capturing biometric features of the user, a user-related liveness check is performed using a challenge-response mechanism, wherein in particular the recording device (30) requests (51, 61) a unique authentication passphrase from the server device (20), the server device (20) selects or generates (52, 62) a unique authentication passphrase with *n_{words}* ≥ 1 randomly selected words and provides (53, 63) the unique authentication passphrase to the recording device (30), wherein the recording device (30) displays the unique authentication passphrase to the user and prompts the user to speak the unique authentication during the recording of the watermarked identification videos, wherein the server device (20) furthermore analyses (56, 68) the watermarked identification videos with respect to the presence of audio data and/or video data identifiable as the user speaking the unique authentication passphrase.

9. Method according to one of claims 1 to 8, **characterised in that**, when capturing a personal identification document of the user, a user-related liveness check is performed, in particular the recording device (30) displaying to the user information prompting the user to move, tilt and/or rotate the personal identification document, in particular such that security features of the personal identification, in particular holograms or optical variable ink, are captured which change visibility depending on the specific angles of lighting and viewing.

10. Method according to one of claims 1 to 9, **characterised in that** the biometric identification video and the document identification video are compared with each other with respect to dynamic ranges, background noise levels and/or relative signal strengths of the extracted frequencies.

11. Method according to one of claims 1 to 10, **characterised in that**, in case at least one prior watermarked identification video recording and/or biometrical features extracted from prior watermarked identification videos is or are stored in or accessible to the server device (30), the recorded watermarked identification video is compared with the at least one or multiple prior watermarked video(s) with respect to visible and/or voice-related biometrical features of the user, in particular voice pattern matching, and/or with respect to a similarity of recording parameters and/or environments, in particular comparing dynamic range, background noise levels and/or relative signal strengths of the extracted frequencies.

12. Method according to claim 10 or 11, **characterised in that** the comparison of the watermarked identification videos is analysed with respect to a likelihood that the various watermarked identification videos are recorded at the same place and/or subsequently at the same time.

13. System (10) for validating remote live video-recording identification of a user, the system (10) comprising at least one server device (20) and at least one recording device (30) connected or connectable to the at least one server device (20), wherein the client device (30) comprises a camera (34) and a microphone (38) and is equipped to record videos with the camera (34) and the microphone (38), wherein the recording device (30) furthermore comprises at least one of a speaker device (36) and a vibration device (40), wherein the server device (20) comprises a first unit (26) configured to select or generate unique or quasi-unique watermarking specifications on request by the recording device (30) and a second unit (28) configured to analyse watermarked identification videos transmitted by the recording device (30) according to a method according to one of claims 1 to 12.

14. System (10) according to claim 13, **characterised in that** the recording device (30) further comprises a display (32) configured to display commands to be followed by a user and/or an accelerometer (42).

## Patentansprüche

1. Verfahren zur Validierung einer Identifikation eines Benutzers mittels Live-Videoaufzeichnung aus der Ferne, wobei das System (10) mindestens eine Aufzeichnungseinrichtung (30) umfasst, die dazu eingerichtet ist, ein Video aufzuzeichnen, wobei die folgenden Schritte nacheinander ausgeführt werden:
a) die Aufzeichnungseinrichtung (30) zeichnet zwei oder mehr mit Wasserzeichen versehene Identifikationsvideos auf (54, 64, 66), die biometrische Merkmale des Benutzers und ein persönliches Identifikationsdokument des Benutzers erfassen, umfassend mindestens eine benutzerbezogene Lebendigkeitsprüfung, wobei die zwei oder mehr Identifikationsvideos mit Wasserzeichen versehen werden, wobei die Aufzeichnungseinrichtung (30) während der Aufzeichnung der Identifikationsvideos physische Wasserzeichensignale gemäß einer einzigartigen oder quasi-einzigartigen Wasserzeichenspezifikation erzeugt, wobei die physischen Wasserzeichensignale mittels physischer Schwingungen, die von einer Lautsprechereinrichtung (36) der Aufzeichnungseinrichtung (30) und/oder einer Vibrationseinrichtung (40) der Aufzeichnungseinrichtung (30) erzeugt und von einem Mikrofon (38), einer Kamera (34) und/oder einem Beschleunigungsmesser (42) der Aufzeichnungseinrichtung (30) aufgezeichnet werden, in die Audiospur und/oder die Videospur gelangen, wobei mindestens zwei separate Identifikationsvideos aufgezeichnet werden (64, 66), wobei mindestens ein Video zur biometrischen Identifikation die biometrischen Merkmale des Benutzers erfasst und mindestens ein separates Video zur Dokumentidentifikation das persönliche Identifikationsdokument des Benutzers erfasst, wobei die mindestens zwei separaten Identifikationsvideos unter Verwendung von unterschiedlichen einzigartigen oder quasi-einzigartigen Wasserzeichenspezifikationen mit Wasserzeichen versehen werden,
b) die aufgezeichneten, mit Wasserzeichen versehenen Identifikationsvideos werden durch eine Analyseeinheit der Aufzeichnungseinrichtung (30) oder eine Servereinrichtung (20) während des Aufzeichnens der mit Wasserzeichen versehenen Identifikationsvideos oder nach Beenden des Aufzeichnens der mit Wasserzeichen versehenen Identifikationsvideos analysiert, und
c) die mit Wasserzeichen versehenen Identifikationsvideos werden durch die Analyseeinheit hinsichtlich Identifikationsinformationen des Benutzers und hinsichtlich des Vorhandenseins von Wasserzeichensignalen gemäß den einzigartigen oder quasi-einzigartigen Wasserzeichenspezifikationen analysiert (56, 68),
wobei das Video zur biometrischen Identifikation und das Video zur Dokumentidentifikation miteinander in Bezug auf eine Ähnlichkeit von Aufzeichnungsparametern und/oder -umgebungen verglichen werden.

2. Verfahren nach Anspruch 1, wobei das System ferner eine Servereinrichtung (20) umfasst, mit der die Aufzeichnungseinrichtung (30) verbunden oder verbindbar ist, wobei der Benutzer vor dem Aufzeichnen der Aufzeichnung eine Identifikationsanforderung auf der Aufzeichnungseinrichtung (30) initialisiert, die Aufzeichnungseinrichtung (30) eine einzigartige Wasserzeichenspezifikation von einer Servereinrichtung (20) anfordert (51, 61), und die Servereinrichtung (20) eine einzigartige oder quasi-einzigartige Wasserzeichenspezifikation auswählt oder erzeugt (52, 62) und der Aufzeichnungseinrichtung (30) die einzigartige oder quasi-einzigartige Wasserzeichenspezifikation bereitstellt (53, 63).

3. Verfahren nach Anspruch 1 oder 2, **dadurch gekennzeichnet, dass** die einzigartige oder quasi-einzigartige Wasserzeichenspezifikation eine Wasserzeichen-Audiodatei ist, die von der Aufzeichnungseinrichtung (30) zumindest einmalig zu Beginn der Aufzeichnung und/oder ein oder mehrere festgelegte Male nach dem Beginn der Aufzeichnung abgespielt werden soll, oder die einzigartige oder quasi-einzigartige Wasserzeichenspezifikation eine Wasserzeichendatendatei ist, die die Spezifikation einer nicht zufälligen oder zufälligen Abfolge von einer oder mehreren Tonfrequenzen und/oder Vibrationssignalen umfasst, wobei sie insbesondere Zeitinformationen, wobei die Zeitinformationen insbesondere ab dem Zeitpunkt des Beginns der Aufzeichnung des Identifikationsvideos zählen, oder absolute Zeitstempel umfasst.

4. Verfahren nach Anspruch 3, **dadurch gekennzeichnet, dass** die Audiodatei oder die Wasserzeichendatendatei einen Satz von *n_{freq}* Zufallsfrequenzen mit *n_{freq}* ≥ 1 und einen Zeitstempel *t_{play}* umfasst, wobei die Frequenzen innerhalb, oberhalb und/oder unterhalb des hörbaren Bereichs liegen, sich im Laufe der Zeit zufällig oder deterministisch verändern oder konstant sind, und/oder unterschiedliche Merkmale bezüglich der Dauer aufweisen, wobei die Merkmale bezüglich der Dauer eine gepulste, begrenzte konstante oder unbegrenzte Länge umfassen.

5. Verfahren nach einem der Ansprüche 1 bis 4, **dadurch gekennzeichnet, dass** Schwankungen, die von einem Beschleunigungsmesser (42) der Aufnahmeeinrichtung (30) erkannt werden, in Verbindung mit den zwei oder mehr Identifikationsvideos an die Servereinrichtung (20) gesendet werden und von der Servereinrichtung (20) in Bezug auf ihre Übereinstimmung mit der einzigartigen oder quasi-einzigartigen Wasserzeichenspezifikation analysiert werden.

6. Verfahren nach einem der Ansprüche 1 bis 5, **dadurch gekennzeichnet, dass** die von der Servereinrichtung (20) in Schritt c) durchgeführte Analyse der Wasserzeichensignale der Identifikationsvideos eines oder mehrere der folgenden umfasst:
- Hintergrundgeräuschunterdrückung in der Audiospur der mit Wasserzeichen versehenen Identifikationsvideos,
- akustische Rauschpegelerkennung in der Audiospur der mit Wasserzeichen versehenen Identifikationsvideos in Bezug auf Vibrationssignale infolge der Aktivierung einer Vibrationseinrichtung der Aufzeichnungseinrichtung,
- Erkennung optischer Verzerrungen in den Videospuren der mit Wasserzeichen versehenen Identifikationsvideos infolge der Aktivierung einer Vibrationseinrichtung der Aufzeichnungseinrichtung,
- eine Fourier-Analyse, die eine Spitzenerkennung in dem Fourier-Spektrum der Audiospuren der mit Wasserzeichen versehenen Identifikationsvideos umfasst, oder Hauptkomponenten- oder Wavelet-Analysen,
- Vergleich eines Satzes von erkannten Frequenzen mit einem Satz von erzeugten Frequenzen gemäß der einzigartigen oder quasi-einzigartigen Wasserzeichenspezifikation,
- eine Zeitstempelüberprüfung von erkannten Signalen, und
- eine Musterüberprüfung in Bezug auf Veränderungen in den erkannten und erzeugten Frequenzen.

7. Verfahren nach einem der Ansprüche 1 bis 6, **dadurch gekennzeichnet, dass** die Beschleunigungsmesserdaten über eine Folge von Benutzeraufforderungen und/oder Aufzeichnungen hinweg analysiert werden, wobei die Folge eine Benutzeridentifikation und/oder dokumentbasierte Identifikation umfasst, die eine oder mehrere Videosequenzen und/oder Aufzeichnungen umfasst.

8. Verfahren nach einem der Ansprüche 1 bis 7, **dadurch gekennzeichnet, dass**, beim Erfassen von biometrischen Merkmalen des Benutzers, eine benutzerbezogene Lebendigkeitsprüfung unter Verwendung von einem Challenge-Response-Mechanismus durchgeführt wird, wobei insbesondere die Aufzeichnungseinrichtung (30) eine einzigartige Authentifizierungspassphrase von der Servereinrichtung (20) anfordert (51, 61), die Servereinrichtung (20) eine einzigartige Authentifizierungspassphrase mit *n_{words}* ≥ 1 zufällig ausgewählten Wörtern auswählt oder erzeugt (52, 62) und der Aufzeichnungseinrichtung (30) die einzigartige Authentifizierungspassphrase bereitstellt (53, 63), wobei die Aufzeichnungseinrichtung (30) dem Benutzer die einzigartige Authentifizierungspassphrase anzeigt und den Benutzer auffordert, die einzigartige Authentifizierung während der Aufzeichnung der mit Wasserzeichen versehenen Identifikationsvideos einzusprechen, wobei die Servereinrichtung (20) ferner die mit Wasserzeichen versehenen Identifikationsvideos in Bezug auf das Vorhandensein von Audiodaten und/oder Videodaten analysiert (56, 68), die als ein Einsprechen der einzigartigen Authentifizierungspassphrase durch den Benutzer identifizierbar sind.

9. Verfahren nach einem der Ansprüche 1 bis 8, **dadurch gekennzeichnet, dass**, beim Erfassen eines persönlichen Identifikationsdokuments des Benutzers, eine benutzerbezogene Lebendigkeitsprüfung durchgeführt wird, wobei, insbesondere die Aufzeichnungseinrichtung (30) dem Benutzer Informationen anzeigt, die den Benutzer auffordern, das persönliche Identifikationsdokument zu bewegen, zu neigen und/oder zu drehen, insbesondere so, dass Sicherheitsmerkmale des persönlichen Identifikationsdokuments, insbesondere Hologramme oder optisch veränderliche Farbe, erfasst werden, welche ihre Sichtbarkeit in Abhängigkeit von den spezifischen Beleuchtungs- und Betrachtungswinkeln verändern.

10. Verfahren nach einem der Ansprüche 1 bis 9, **dadurch gekennzeichnet, dass** das Video zur biometrischen Identifikation und das Video zur Dokumentidentifikation miteinander in Bezug auf Dynamikbereiche, Hintergrundgeräuschpegel und/oder relative Signalstärken der extrahierten Frequenzen verglichen werden.

11. Verfahren nach einem der Ansprüche 1 bis 10, **dadurch gekennzeichnet, dass**, falls mindestens eine zuvor mit Wasserzeichen versehene Identifikationsvideoaufzeichnung und/oder biometrische Merkmale, die aus zuvor mit Wasserzeichen versehenen Identifikationsvideos extrahiert werden, auf der Servereinrichtung (30) gespeichert oder für diese zugänglich ist oder sind, das aufgezeichnete, mit Wasserzeichen versehene Identifikationsvideo mit dem mindestens einen oder den mehreren zuvor mit Wasserzeichen versehenen Video(s) in Bezug auf sichtbare und/oder stimmbezogene biometrische Merkmale des Benutzers, insbesondere Abgleichen von Sprachmustern, und/oder in Bezug auf eine Ähnlichkeit von Aufzeichnungsparametern und/oder -umgebungen verglichen wird, insbesondere durch Vergleichen von Dynamikbereich, Hintergrundgeräuschpegeln und/oder relativen Signalstärken der extrahierten Frequenzen.

12. Verfahren nach Anspruch 10 oder 11, **dadurch gekennzeichnet, dass** der Vergleich der mit Wasserzeichen versehenen Identifikationsvideos in Bezug auf eine Wahrscheinlichkeit analysiert wird, dass die verschiedenen, mit Wasserzeichen versehenen Identifikationsvideos an dem gleichen Ort und/oder darauffolgend zur gleichen Zeit aufgezeichnet werden.

13. System (10) zur Validierung einer Identifikation eines Benutzers mittels Live-Videoaufzeichnung aus der Ferne, wobei das System (10) mindestens eine Servereinrichtung (20) und mindestens eine Aufzeichnungseinrichtung (30), die mit der mindestens einen Servereinrichtung (20) verbunden oder verbindbar ist, umfasst, wobei die Clienteinrichtung (30) eine Kamera (34) und ein Mikrofon (38) umfasst und dazu eingerichtet ist, Videos mit der Kamera (34) und dem Mikrofon (38) aufzuzeichnen, wobei die Aufzeichnungseinrichtung (30) ferner mindestens eines von einer Lautsprechereinrichtung (36) und einer Vibrationseinrichtung (40) umfasst, wobei die Servereinrichtung (20) eine erste Einheit (26), die so ausgestaltet ist, dass sie einzigartige oder quasi-einzigartige Wasserzeichenspezifikationen auf Anfrage von der Aufzeichnungseinrichtung (30) auswählt oder erzeugt, und eine zweite Einheit (28) umfasst, die so ausgestaltet ist, dass sie mit Wasserzeichen versehene Identifikationsvideos, die von der Aufzeichnungseinrichtung (30) gemäß einem Verfahren nach einem der Ansprüche 1 bis 12 gesendet werden, analysiert,.

14. System (10) nach Anspruch 13, **dadurch gekennzeichnet, dass** die Aufzeichnungseinrichtung (30) ferner eine Anzeige (32), die so ausgestaltet ist, dass sie von einem Benutzer zu befolgende Anweisungen anzeigt, und/oder einen Beschleunigungsmesser (42) umfasst.

## Revendications

1. Procédé de validation de l'identification d'un utilisateur par enregistrement vidéo en direct à distance, dans lequel, dans un système (10) comprenant au moins un dispositif d'enregistrement (30) équipé pour enregistrer une vidéo, les étapes suivantes sont mises en œuvre successivement :
a) le dispositif d'enregistrement (30) enregistre (54, 64, 66) au moins deux vidéos d'identification filigranées capturant des caractéristiques biométriques de l'utilisateur et un document d'identification personnel de l'utilisateur comprenant au moins un contrôle d'état d'activité relatif à l'utilisateur, les deux ou plusieurs vidéos d'identification étant marquées par un filigrane, le dispositif d'enregistrement (30), pendant l'enregistrement des vidéos d'identification, générant des signaux de filigrane physique selon une spécification de filigrane unique ou quasi-unique, les signaux de filigrane physique entrant dans la piste audio et/ou la piste vidéo au moyen d'oscillations physiques générées par un dispositif de haut-parleur (36) du dispositif d'enregistrement (30) et/ou un dispositif de vibration (40) du dispositif d'enregistrement (30) et enregistrées par un microphone (38), une caméra (34) et/ou un accéléromètre (42) du dispositif d'enregistrement (30), au moins deux vidéos d'identification séparées étant enregistrées (64, 66), avec au moins une vidéo d'identification biométrique capturant les caractéristiques biométriques de l'utilisateur et au moins une vidéo d'identification de document distincte capturant le document d'identification personnel de l'utilisateur, lesdites au moins deux vidéos d'identification distinctes étant filigranées au moyen de spécifications de filigrane différentes, uniques ou quasi-uniques,
b) les vidéos d'identification filigranées enregistrées sont analysées par une unité d'analyse du dispositif d'enregistrement (30) ou d'un dispositif serveur (20) pendant l'enregistrement des vidéos d'identification filigranées ou après avoir terminé l'enregistrement des vidéos d'identification filigranées, et
c) l'unité d'analyse analyse (56, 68) les vidéos d'identification filigranées pour des informations d'identification de l'utilisateur et pour la présence de signaux de filigrane selon les spécifications de filigrane uniques ou quasi-uniques,
la vidéo d'identification biométrique et la vidéo d'identification de document étant comparées l'une à l'autre en ce qui concerne une similitude de paramètres d'enregistrement et/ou d'environnements.

2. Procédé selon la revendication 1, dans lequel le système comprend en outre un dispositif serveur (20), auquel le dispositif d'enregistrement (30) est connecté ou apte à être connecté, l'utilisateur, préalablement à l'enregistrement de l'enregistrement, initialisant une requête d'identification sur le dispositif d'enregistrement (30), le dispositif d'enregistrement (30) demandant (51, 61) une spécification de filigrane unique à un dispositif serveur (20), et le dispositif serveur (20) sélectionnant ou générant (52, 62) une spécification de filigrane unique ou quasi-unique et fournissant (53, 63) la spécification de filigrane unique ou quasi-unique au dispositif d'enregistrement (30).

3. Procédé selon la revendication 1 ou la revendication 2, **caractérisé en ce que** la spécification de filigrane unique ou quasi-unique est un fichier son de filigrane à lire au moins une fois par le dispositif d'enregistrement (30) au début de l'enregistrement et/ou une ou plusieurs fois spécifiées après le début de l'enregistrement, ou la spécification de filigrane unique ou quasi-unique est un fichier de données de filigrane contenant la spécification d'une série non aléatoire ou aléatoire d'une ou plusieurs fréquences sonores et/ou signaux de vibration, comportant notamment des informations temporelles, les informations temporelles comptant notamment à partir du moment du début de l'enregistrement de la vidéo d'identification, ou des horodatages absolus.

4. Procédé selon la revendication 3, **caractérisé en ce que** le fichier son ou le fichier de données de filigrane contient un ensemble de fréquences aléatoires *n_{freq}* avec *n_{freq}* ≥ 1 et un horodatage *t_{piay}*, les fréquences étant dans la plage audible, ou au-dessus et/ou en dessous de cette plage audible, changeant de manière aléatoire ou déterministe dans le temps ou étant constantes, et/ou ont des caractéristiques de durée différentes, les caractéristiques de durée comprenant une longueur puisée, constante limitée ou illimitée.

5. Procédé selon l'une des revendications 1 à 4, **caractérisé en ce que** des fluctuations détectées par un accéléromètre (42) du dispositif d'enregistrement (30) sont transmises au dispositif serveur (20) en relation avec les deux ou plusieurs vidéos d'identification et analysées par le dispositif serveur (20) en ce qui concerne à sa conformité avec la spécification de filigrane unique ou quasi-unique.

6. Procédé selon l'une des revendications 1 à 5, **caractérisé en ce que** l'analyse des signaux de filigrane à l'étape c) des vidéos d'identification effectuée par le dispositif serveur (20) comprend un ou plusieurs parmi :
- une suppression du bruit de fond dans la piste audio des vidéos d'identification filigranées,
- une détection du niveau de bruit acoustique dans la piste audio des vidéos d'identification filigranées par rapport à des signaux vibratoires dus à l'activation d'un dispositif vibratoire du dispositif d'enregistrement,
- une détection de distorsion optique dans les pistes vidéo des vidéos d'identification filigranées due à l'activation d'un dispositif de vibration du dispositif d'enregistrement,
- une analyse de Fourier incluant la détection de pics dans le spectre de Fourier des pistes audio des vidéos d'identification filigranées, ou analyses en composante principale ou en ondelettes,
- une comparaison d'un ensemble de fréquences détectées avec un ensemble de fréquences générées selon la spécification de filigrane unique ou quasi-unique,
- une vérification d'horodatage des signaux détectés, et
- une vérification de modèle en ce qui concerne les changements dans les fréquences détectées et générées.

7. Procédé selon l'une des revendications 1 à 6, **caractérisé en ce que** les données de l'accéléromètre sont analysées sur une séquence d'invites d'utilisateur et/ou d'enregistrements, la séquence comprenant une identification d'utilisateur et/ou une identification basée sur un document, comprenant une ou plusieurs séquences vidéo et/ou enregistrements.

8. Procédé selon l'une des revendications 1 à 7, **caractérisé en ce que**, lors de la capture de caractéristiques biométriques de l'utilisateur, un contrôle d'état d'activité relatif à l'utilisateur est effectué en utilisant un mécanisme de questions-réponses, le dispositif d'enregistrement (30), notamment, demandant (51, 61) une phrase secrète d'authentification unique provenant du dispositif serveur (20), le dispositif serveur (20) sélectionnant ou générant (52, 62) une phrase secrète d'authentification unique avec *nₘₒₜₛ* ≥ 1 mots choisis au hasard, et fournissant (53, 63) la phrase secrète d'authentification unique au dispositif d'enregistrement (30), le dispositif d'enregistrement (30) affichant la phrase secrète d'authentification unique à l'utilisateur et invitant l'utilisateur à prononcer l'authentification unique pendant l'enregistrement des vidéos d'identification filigranées, le dispositif serveur (20) analysant en outre (56, 68) les vidéos d'identification filigranées par rapport à la présence de données audio et/ou de données vidéo identifiables comme étant l'utilisateur prononçant la phrase secrète d'authentification unique.

9. Procédé selon l'une des revendications 1 à 8, **caractérisé en ce que**, lors de la capture d'un document d'identification personnel de l'utilisateur, un contrôle d'état d'activité relatif à l'utilisateur est effectué, notamment le dispositif d'enregistrement (30) affichant à l'utilisateur des informations utilisateur invitant l'utilisateur à déplacer, incliner et/ou de faire pivoter le document d'identification personnelle, en particulier de telle sorte que des caractéristiques de sécurité de l'identification personnelle, notamment des hologrammes ou de l'encre optique variable, soient capturées, qui changent la visibilité en fonction des angles d'éclairage et de vision spécifiques.

10. Procédé selon l'une des revendications 1 à 9, **caractérisé en ce que** la vidéo d'identification biométrique et la vidéo d'identification de document sont comparées l'une à l'autre en ce qui concerne les plages dynamiques, les niveaux de bruit de fond et/ou les intensités relatives des signaux des fréquences extraites.

11. Procédé selon l'une des revendications 1 à 10, **caractérisé en ce que**, dans le cas où au moins un enregistrement vidéo d'identification filigrané préalable et/ou des caractéristiques biométriques extraites de vidéos d'identification filigranées antérieures est ou sont stockés ou accessibles au dispositif serveur (30), la vidéo d'identification filigranée enregistrée est comparée à ladite au moins une ou plusieurs vidéo(s) filigranée(s) antérieure(s) en ce qui concerne les caractéristique biométriques visibles et/ou vocales de l'utilisateur, en particulier la correspondance de modèles vocaux, et/ou par rapport à une similitude de paramètres d'enregistrement et/ou d'environnements, en particulier en comparant une plage dynamique, des niveaux de bruit de fond et/ou des intensités de signal relatives des fréquences extraites.

12. Procédé selon la revendication 10 ou la revendication 11, **caractérisé en ce que** la comparaison des vidéos d'identification filigranées est analysée par rapport à une probabilité que les différentes vidéos d'identification filigranées soient enregistrées au même endroit et/ou ultérieurement au même moment.

13. Système (10) de validation de l'identification d'un utilisateur par enregistrement vidéo en direct à distance, le système (10) comprenant au moins un dispositif serveur (20) et au moins un dispositif d'enregistrement (30) connecté ou apte à être connecté audit au moins un dispositif serveur (20), le dispositif client (30) comprenant une caméra (34) et un microphone (38) et étant équipé pour enregistrer des vidéos avec la caméra (34) et le microphone (38), le dispositif d'enregistrement (30) comprenant en outre au moins un parmi un dispositif de haut-parleur (36) et d'un dispositif de vibration (40), le dispositif serveur (20) comprenant une première unité (26) configurée pour sélectionner ou générer des spécifications de filigrane uniques ou quasi-uniques à la demande du dispositif d'enregistrement (30), et une deuxième unité (28) configurée pour analyser des vidéos d'identification filigranées transmises par le dispositif d'enregistrement (30) selon un procédé selon l'une des revendications 1 à 12.

14. Système (10) selon la revendication 13, **caractérisé en ce que** le dispositif d'enregistrement (30) comprend en outre un afficheur (32) configuré pour afficher des commandes à suivre par un utilisateur et/ou un accéléromètre (42).
